# EUROPEAN PATENT SPECIFICATION

(11) **EP 2 319 975 B1**
(45) Date of publication and mention of the grant of the patent: **18.09.2013**
(21) Application number: 11150164.9
(22) Date of filing: 22.11.2007
(51) Int. Cl.: D06F 58/28, D06F 37/30

(54) **Electric household appliance**
Elektrisches Haushaltsgerät
Appareil ménager électrique

(43) Date of publication of application: 11.05.2011
(62) Divisional of application: 07121371.4
(73) Proprietor: Electrolux Home Products Corporation N.V., 1130 Brussel (BE)
(72) Inventor: Maguolo, Costantino, 33080 Porcia (PN) (IT); Bottos, Roberto, 33080 Porcia (PN) (IT)
(74) Representative: Nardoni, Andrea

(56) References cited:
- US-A1- 2007 063 603
- US-B1- 6 184 639

## Description

The present invention relates to an electric household appliance.

More specifically, the present invention relates to an electric household appliance preferably corresponding to a home drier or washing machine, to which the following description refers purely by way of example.

As is known, currently marketed washing machines comprise a casing, in which is fitted a laundry wash assembly typically comprising a wash tub, a laundry drum mounted inside the wash tub to rotate freely about a respective axis of rotation, a pulley fitted to the laundry drum drive shaft, and a drive in turn comprising an electric motor connected to the pulley by a drive belt to rotate the laundry drum about its axis of rotation.

Washing machines of the above type also comprise an electronic control module typically defined by an inverter, which varies the speed of the electric motor on the basis of a number of control signals generated by a central control unit as a function of the operating cycle set by the user.

More specifically, the electronic control module, i.e. inverter, is currently mounted inside the washing machine casing, a given distance from the electric motor, and is wired to the electric motor by electric cables in the space inside the casing.

US 2007/063603 discloses a front loading washing machine including an integrated motor and controller assembly. The controller is mounted directly to one of a pair of opposing endshields of the electric motor and the endshields are mounted directly to a stator of the motor. The controller can include an insulating shield positioned between a controller circuit board and the motor endshield to which the controller is mounted. The insulating shield providing electrical arcing protection, thermal insulation and/or electromagnetic insulation between the circuit board and the endshield.

As is known, a major goal in the washing machine industry is to devise technical solutions enabling a reduction in assembly time, and therefore manufacturing cost, of the machines.

Unfortunately, at present, the step of assembling the electric/electronic components, and in particular the drive, of washing machines of the above type is particularly time-consuming, and so fails to meet the above requirements. In fact, assembly of the above components involves a number of separate operations comprising fixing the electric motor to the bottom face of the wash tub; fixing the electronic control module to an inner lateral wall of the casing; connecting the electric motor electrically to the inverter by means of a number of cables; and, finally, arranging the electric wiring compactly inside the casing.

It is an object of the present invention to provide an electric household appliance comprising a compact, integrated drive designed to reduce the assembly time of the appliance.

According to the present invention, there is provided an electric household appliance as claimed in Claim 1 and, preferably, in any one of the following Claims depending directly or indirectly on Claim 1.

A non-limiting embodiment of the present invention will be described by way of example with reference to the accompanying drawings, in which:
Figure 1 shows a schematic view in perspective, with parts removed for clarity, of an electric household appliance in accordance with the teachings of the present invention;
Figure 2 shows a side view in perspective of a drive forming part of the Figure 1 appliance;
Figure 3 shows a view in perspective, with parts removed for clarity, of a detail of the drive of the Figure 1 appliance;
Figure 4 shows a side view in perspective of connection of an electronic control module to a housing portion of the Figure 2 drive;
Figure 5 shows a side view in perspective of the Figure 4 electronic module;
Figure 6 shows a larger-scale cross section VI-VI of the electronic circuit of the Figure 5 electronic module.

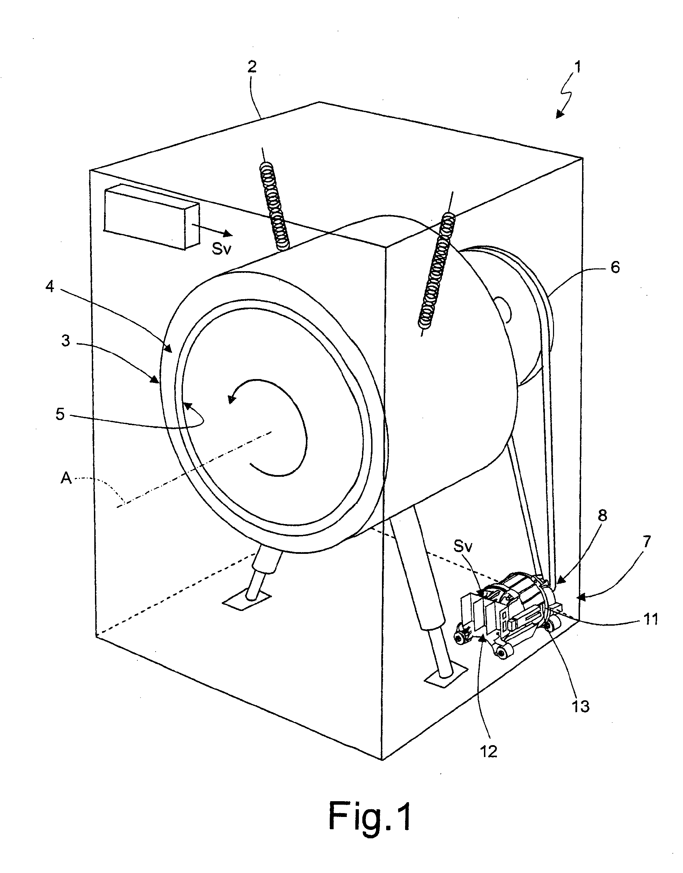

Number 1 in Figure 1 indicates as a whole an electric household appliance corresponding preferably, though not necessarily, to a washing machine. It is understood, however, that the following description also applies equally well to a home laundry drier.

Washing machine 1 comprises an outer casing 2, in which is fitted a laundry wash assembly 3, in turn comprising a wash tub 4, a laundry drum 5 housing the laundry and mounted inside wash tub 4 to rotate freely about a predetermined axis of rotation A, a pulley 6 fitted to the drive shaft of drum 5, a drive 7 having a drive shaft 8 connected to pulley 6 by a drive belt 9 to rotate drum 5 about axis of rotation A, and a main control unit 10 for generating control signals Sᵥ to control the rotation speed of drum 5 as a function of a predetermined wash cycle memorized in main control unit 10 and selected by the user.

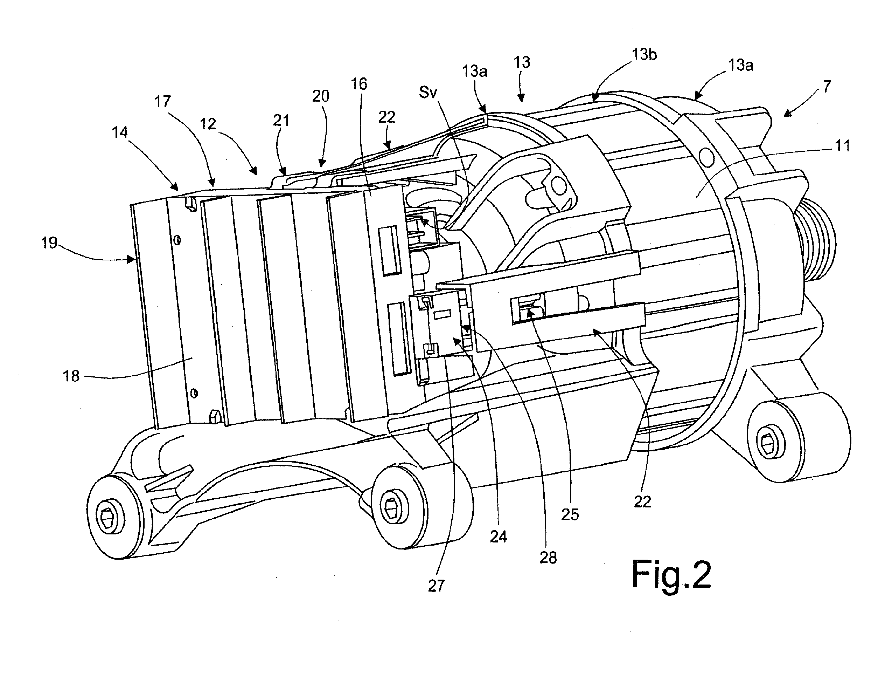

More specifically, with reference to Figures 1 and 2, drive 7 substantially comprises an electric motor 11, and an electronic control module 12, which, unlike the electronic control modules of known appliances, is integrated with the electric motor 11 to form, with it, a single, compact body integrating electric motor 11 and electronic control module 12.

More specifically, in the example shown, the electronic control module 12 is integrated with the housing 13 of electric motor 11 to form, with it, a single, compact outer casing, i.e. one body integrating electric motor 11 and electronic control module 12.

In the example shown, electronic control module 12 is fitted stably, but in easily removable manner, to housing 13 of electric motor 11, and forms a single, compact outer casing with housing 13.

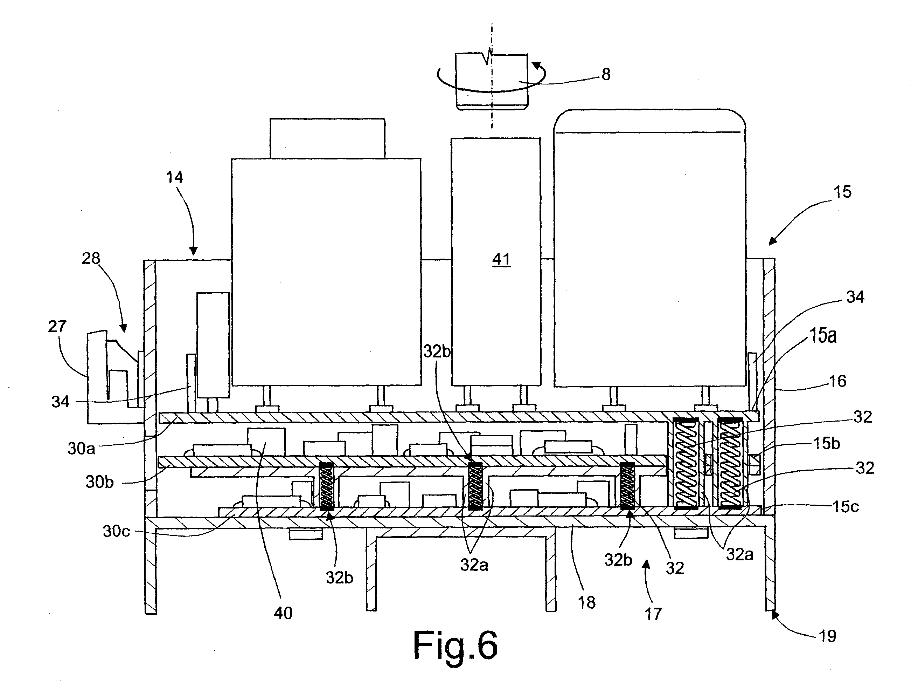

With reference to the Figure 2 example, electronic control module 12 substantially comprises a protective outer container or case 14 fixed stably, but in easily removable manner, to housing 13 to advantageously form, with housing 13, the outer casing of drive 7; and an electronic circuit 15 (Figure 6) at least partially housed inside case 14 and connected electrically to both main control unit 10, to receive speed control signals SV, and to electric motor 11 to command a variation in rotation speed by the electric motor as a function of speed control signals Sᵥ.

More specifically, case 14 is fixed to housing 13, immediately adjacent to one of the two end portions 13a of housing 13 of electric motor 11. In the example shown, housing 13 of electric motor 11 comprises at least one half-shell or lateral cover defining one of the end portions 13a of housing 13, and case 14 is designed to fit stably, but in easily removable manner, to an outer wall of end portion 13a.

More specifically, housing 13 is substantially divided into three different portions : a central portion 13b, which is preferably, though not necessarily, externally cylindrical; and two axial end portions 13a, each defined by a cover. In the example shown, central portion 13b is preferably, though not necessarily, made of metal, and houses a stator (not shown) connected electrically to electronic circuit 15 as described below, and a rotor (not shown) mounted to rotate freely inside the stator, and the shaft of which defines drive shaft 8. More specifically, according to an embodiment the central portion 13b could be the outer metal surface of the stator of the electric motor 11.

The two end portions 13a, on the other hand, are conveniently made of plastic, and are fitted stably, but in easily removable manner, to opposite ends of central portion 13b.

Case 14 is preferably, though not necessarily, made of plastic, is substantially box-shaped, and is designed to house electronic circuit 15.

More specifically, in the example shown, case 14 substantially comprises a box member 16 open at both axial ends, and which is closed at one open end by a heatsink 17. In the example shown, heatsink 17 comprises a base plate 18 of heat-conducting material, e.g. aluminium, closing the open end of the box member 16; and a number of dispersion plates 19 projecting from the outer face of base plate 18.

The opposite side to dispersion plates 19, base plate 18 has a smooth surface for preferably, though not necessarily, supporting electronic circuit 15.

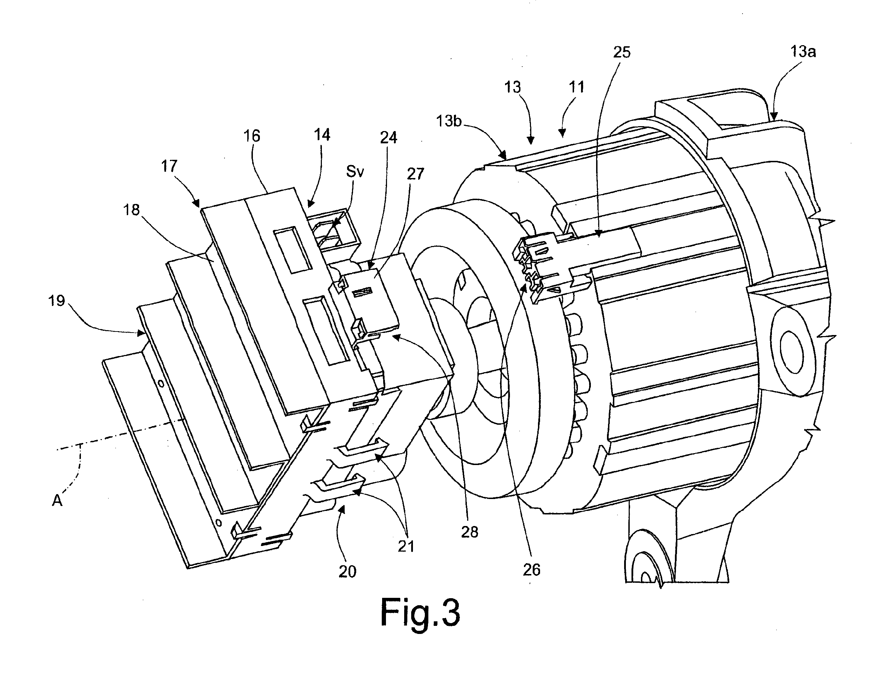

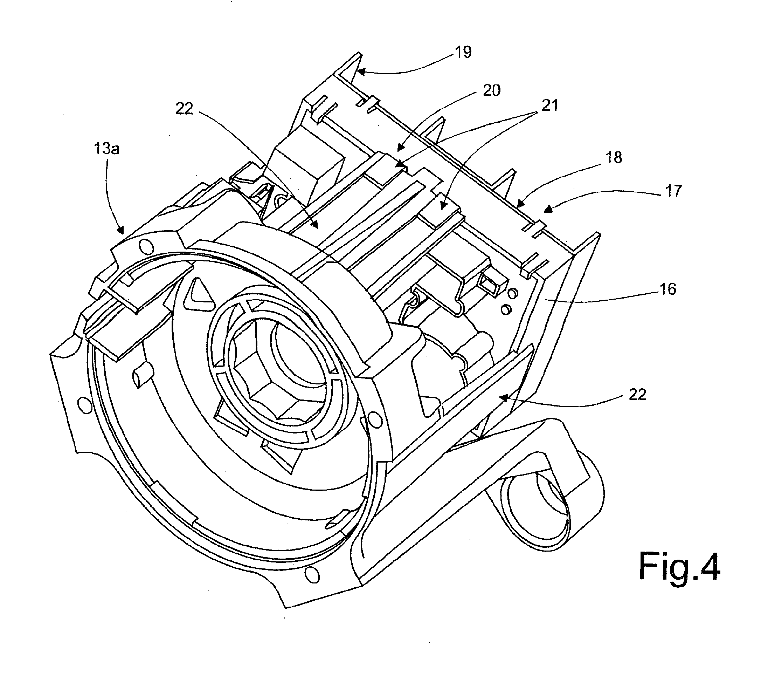

With reference to Figures 3 and 4, case 14 is designed to fit to one of the two end portions 13a by means of a click-on fastening mechanism 20, which substantially comprises a number of substantially hook-like connecting tongues 21 projecting from the outer portion of case 14 in a direction substantially perpendicular to base plate 18, for locking case 14 to end portion 13a of housing 13.

With reference to Figures 2 and 4, end portion 13a comprises a number of connecting winglets 22 which project from the outer portion of the end portion 13a in a direction substantially parallel with the longitudinal axis A of housing 13; whereas the connecting tongues 21 project from the box member 16 and are spaced so as to be aligned with and fit inside respective seats formed on the connecting winglet 22, when case 14 locks onto end portion 13a.

In the example shown, electronic control module 12 locks onto end portion 13a when the axial ends of tongues 21 are fully inserted inside the seats of the free ends of the connecting winglet 22 and click radially outwards to prevent withdrawal of tongues 21 from seats of the connecting winglet 22.

With reference to Figures 2 and 3, drive 7 also comprises a click-on electric connecting system, which comprises two electric connectors 24, 25 fixed rigidly to case 14 and electric motor 11 respectively, and aligned with each other, parallel to longitudinal axis A, so that mechanical connection of case 14 and electric motor 11 provides for simultaneously connecting electric connectors 24 and 25.

In the Figure 2 and 3 example, electric connector 25 has a casing preferably, though not necessarily, made of plastic, and which is fixed rigidly to electric motor 11 and designed to house an electric joint 26 connected by an inner conductor (not shown) to the stator of electric motor 11.

Electric connector 24, on the other hand, comprises an elongated supporting portion 27 also preferably, though not necessarily, made of plastic, and which projects from the lateral edge of the box member 16 in a direction substantially perpendicular to base plate 18, so as to fit with its free end facing electric connector 25; and an electric joint 28 connected electrically to electronic circuit 15 and located on the end of elongated supporting portion 27, so as to engage joint 26 of electric connector 25 as case 14 is connected mechanically to housing 13.

Electronic circuit 15 is defined by an inverter, and comprises an interface circuit 15a for receiving, filtering, and conditioning speed signals Sᵥ from main control unit 10; a control circuit 15b connected to interface circuit 15a to receive speed signals Sᵥ and generate control signals accordingly; and a power circuit 15c, which receives the control signals and accordingly regulates current/voltage supply to electric motor 11 to regulate the speed of the motor.

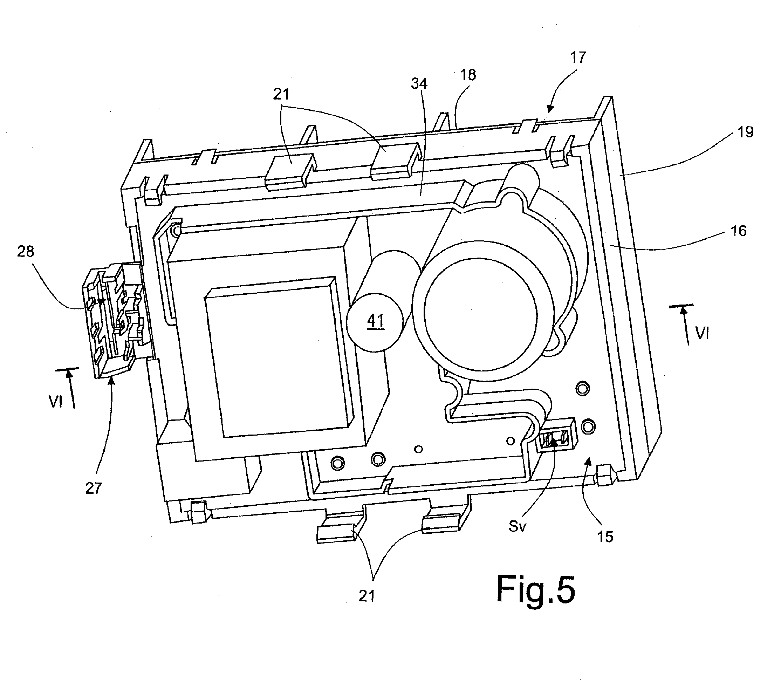

More specifically, in the Figure 5 example, interface circuit 15a, control circuit 15b, and power circuit 15c are conveniently defined respectively by three electronic boards 30a, 30b, 30c, which are superimposed facing one another inside case 14 to form a substantially sandwich structure.

With reference to Figure 5, electronic boards 30a, 30b, 30c are sized to fit inside case 14, and each have a track or electric path, which connects the various electric components forming part of the electronic circuit on the electronic board, and which has a number of contact areas or surface contact portions 31 made of conducting material and defining the input/output terminals of the electronic circuits of each electronic board 30a, 30b, 30c.

Electronic circuit 15 also comprises a number of elastically operated connecting devices 32, which are interposed between electronic boards 30a, 30b, 30c, and are aligned with, to electrically connect, surface contact portions 31.

More specifically, in the Figure 6 example, each connecting device 32 substantially comprises a tubular portion 32a made of plastic and extending substantially perpendicularly to electronic board 30a, 30b, 30c, so that its free ends face two respective surface portions 31 of two separate electronic boards 30a, 30b, 30c; and a contact 32b housed inside tubular portion 32a, with its free ends contacting surface portions 31.

More specifically, in the Figure 5 example, contact 32b comprises an elastic spring made of conducting material, fitted to slide freely inside tubular portion 32a, and the free ends of which rest against, to electrically connect, the surface contact portions 31 of the two electronic boards 30a, 30b, 30c.

In the Figure 5 example, tubular portion 32a of a connecting device 32 connecting the two outer electronic boards 30a, 30c in the sandwich structure extends through a through hole 33, formed in electronic board 30b interposed between electronic boards 30a and 30c, so as to connect electronic boards 30a and 30c electrically.

In the sandwich structure in the Figure 5 example, electronic board 30c of power circuit 15c rests on base plate 18; electronic board 30b of control circuit 15b is positioned facing and parallel to electronic board 30c, on the opposite side to base plate 18; and electronic board 30a of interface circuit 15a is positioned facing and parallel to electronic board 30b of control circuit 15b, on the opposite side to electronic board 30c.

With reference to Figures 5, control board 30a of interface circuit 15a is advantageously designed to prevent surface detachment of its larger electronic components when electronic circuit 15 is subjected to in-service vibration by appliance 1.

For this purpose, electronic board 30a of interface circuit 15a comprises a peripheral retaining wall 34, which projects from and extends along the electronic component connecting surface to surround the electronic components.

Electronic circuit 15 may also comprise a number of measuring sensors housed inside case 14 and fitted stably to electronic boards 30a, 30b, 30c to determine various wash cycle control parameters.

More specifically, electronic circuit 15 may comprise, for example, a sensor 40 for determining acceleration of drive 7 and defined, for example, by an accelerometer connected stably to one of electronic boards 30a, 30b, 30c; and/or a sensor 41 for determining the speed of electric motor 11 and fitted, for example, to one of electronic boards 30a, 30b, 30c, facing a portion of rotor shaft 8 of electric motor 11 to determine the speed of the shaft. In which case, rotor shaft 8 may be sized to project from cover 13a of housing 13 through a hole formed through cover 13a, and through a central hole, so as to project partly inside case 14 in a position facing speed sensor 41 (Figure 5).

The drive described above has numerous advantages.

Firstly, integrating the electronic control module directly with the electric motor housing greatly reduces the time taken to assemble the drive inside the appliance, and therefore the cost of assembling the appliance. In fact, the drive can be assembled inside the appliance in one operation comprising fixing the drive to the wash assembly, with no need to fix the electronic control module and/or wire the electric motor electrically to the electronic control module.

Secondly, the click-on mechanical connecting system and click-on electrical connecting system provide for fast, easy integration of the electronic control module with the electric motor housing.

Thirdly, the sandwich structure arrangement of electronic boards 30a, 30b, 30c is extremely compact, and provides for obtaining a narrow case substantially equal in width to the electric motor housing.

Fourthly, being internally elastic, the contact devices on the electronic boards guarantee electric connection of the surface portions, i.e. inputs/outputs, of the electronic boards even when the drive is subjected to relatively severe vibration.

Lastly, housing the sensors directly inside the electronic control module case further reduces assembly time, and protects the sensors against accidental shock. In fact, unlike known washing machines, in which the accelerometer or speed sensor is located on the electric motor, with no external protection, integrating the sensors in the electronic control module case greatly reduces the risk of damage to the sensors caused by accidental shock.

Clearly, changes may be made to the electric household appliance as described and illustrated herein without, however, departing from the scope of the present invention as defined in the accompanying Claims.

## Claims

1. An electric household appliance (1) comprising a casing (2); a laundry drum (5) mounted inside the casing (2) to rotate freely about a predetermined axis of rotation (A); a drive (7) for rotating the drum (5) about said axis of rotation (A) and comprising an electric motor (11) with a motor housing (13); and an electronic control module (12), which is connected electrically to said electric motor (11) to regulate the speed of the electric motor (11) and is integrated with the electric motor (11), wherein said electronic control module (12) comprises an electronic circuit (15) which regulates the speed of said electric motor (11) to regulate the rotation speed of the drum (5); and a case (14) for housing said electronic circuit (15); wherein said motor housing (13) comprises at least one end portion (13a); said case (14) being removably fixed to said at least one end portion (13a) of the motor housing (13), said case (14) and said at least one end portion (13a) are connected to each other by a click-on connecting mechanism (20), **characterized in that** said click-on connecting mechanism (20) comprises a number of hook-like tongues (21) projecting from a wall of said case (14), and extending in a direction substantially parallel to a longitudinal axis of said motor housing (13) to fit inside respective seats formed in said at least one end portion (13a).

2. An electric household appliance as claimed in Claim 1, and comprising a first (24) and second (25) electric connecting means fixed rigidly to said case (14) and to said motor housing (13) respectively, and aligned with one another, said first (24) and second (25) electric connecting means being connected to said electronic circuit (15) and said electric motor (11) respectively.

3. An electric household appliance as claimed in Claim 2, wherein said first electric connecting means (24) comprise a first electric connector (24) designed to project from a lateral wall of said case (14) and to extend in a first direction parallel to a longitudinal axis of said motor housing (13); and said second electric connecting means (25) comprise a second electric connector (25) fixed stably to said motor housing (13) and extending in a second direction substantially parallel to said first direction, so as to engage said first connector (24) when the case (14) is connected mechanically to said end portion (13a) of the motor housing (13).

4. An electric household appliance as claimed in Claim 2, wherein said first (24) and second (25) connecting means comprise click-on electric connecting means.

5. An electric household appliance as claimed in any one of the foregoing Claims, wherein said case (14) comprises a base plate (18) for supporting said electronic circuit (15).

6. An electric household appliance as claimed in Claim 5, wherein said electronic circuit (15) comprises an inverter.

7. An electric household appliance as claimed in Claim 5 or 6, wherein said electronic circuit (15) comprises an interface circuit (15a) for receiving, filtering, and conditioning speed signals (SV) from a main control unit (10); a control circuits (15b) connected to the interface circuit (15a) to receive the speed signals
(SV) and generate control signals accordingly; and a power circuit (15c), which receives the control signals and accordingly regulates current/voltage supply to the electric motor (11) to regulate the speed of the electric motor (11).

8. An electric household appliance as claimed in Claim 7, wherein the interface circuit (15a), the control circuit (15b), and the power circuit (15c) comprise three respective electronic boards (30a, 30b, 30c), which are superimposed facing one another inside the case (14) to form a substantially sandwich structure.

9. An electric household appliance as claimed in Claim 8, wherein at least two of said electronic boards (30a, 30b, 30c) have a number of contact areas or surface contact portions (31) made of conducting material and defining the input/output terminals of the electronic circuits of each electronic board (30a,
30b, 30c); said electronic boards (30a, 30b, 30c) comprising elastically operated electric connecting devices (32), which are interposed between the electronic boards (30a, 30b, 30c) and aligned with, to electrically connect, the surface contact portions (31).

10. An electric household appliance as claimed in Claim 9, wherein said connecting devices (32) each comprise a tubular portion (32a) with its free ends facing two respective surface contact portions (31) of two separate electronic boards (30a, 30b, 30c); and an elastic spring made of conducting material and fitted inside the tubular portion (32a), with the free ends of the spring contacting the two surface contact portions (31).

11. An electric household appliance as claimed in any one of Claims 8 to 10, wherein at least one of the electronic boards (30a, 30b, 30c) comprises a peripheral retaining wall (34) projecting from the electronic component connecting surface to surround the electronic components.

12. An electric household appliance as claimed in any one of Claims 1 to 11, wherein said electronic control module (12) comprises measuring sensors (40) (41) for determining acceleration of said drive (7) and/or the speed of said electric motor (11).

13. An electric household appliance as claimed in claim 5, wherein the hook-like tongues (21) project from a wall of said case (14) in a direction substantially perpendicular to the base plate (18).

## Patentansprüche

1. Elektrisches Haushaltsgerät (1), umfassend ein Gehäuse (2); eine Wäschetrommel (5), die innerhalb des Gehäuses (2) montiert ist, um frei um eine festgelegte Rotationsachse (A) zu rotieren; einen Antrieb (7) zum Rotieren der Trommel (5) um die Rotationsachse (A), der einen Elektromotor (11) mit einem Motorgehäuse (13) umfasst; und ein elektronisches Steuerungsmodul (12), das elektrisch mit dem Elektromotor (11) verbunden ist, um die Geschwindigkeit des Elektromotors (11) zu steuern, und das in den Elektromotor (11) integriert ist, wobei das elektronische Steuerungsmodul (12) einen elektronischen Schaltkreis (15) umfasst, der die Geschwindigkeit des Elektromotors (11) steuert, um die Rotationsgeschwindigkeit der Trommel (5) zu steuern; und ein Gehäuse (14) zur Unterbringung des elektronischen Schaltkreises (15); wobei das Motorgehäuse (13) wenigstens einen Endabschnitt (13a) umfasst und das Gehäuse (14) abnehmbar an dem wenigstens einen Endabschnitt (13a) des Motorgehäuses (13) befestigt ist, wobei das Gehäuse (14) und der wenigstens eine Endabschnitt (13a) miteinander durch einen Einschnappmechanismus (20) verbunden sind, **dadurch gekennzeichnet, dass** der Einschnappmechanismus (20) eine Anzahl hakenartiger Zungen (21) umfasst, die von einer Wand des Gehäuses (14) vorspringen und sich in eine Richtung im wesentlichen parallel zu einer Längsachse des Motorgehäuses (13) erstrecken, um in entsprechende Sitze zu passen, die in dem wenigstens einen Endabschnitt (13a) ausgebildet sind.

2. Elektrisches Haushaltsgerät gemäß Anspruch 1, zusätzlich erste (24) und zweite (25) elektrische Anschlussmittel umfassend, die starr am Gehäuse (14) bzw. am Motorgehäuse (13) befestigt und aneinander ausgerichtet sind, wobei das erste (24) und das zweite (25) elektrische Anschlussmittel mit dem elektronischen Schaltkreis (15) bzw. dem Elektromotor (11) verbunden sind.

3. Elektrisches Haushaltsgerät gemäß Anspruch 2, wobei die ersten elektrischen Anschlussmittel (24) ein erstes elektrisches Verbindungselement (24) umfassen, das so ausgeführt ist, dass es von einer Seitenwand des Gehäuses (14) vorspringt und sich in eine erste Richtung parallel zu einer Längsachse des Motorgehäuses (13) erstreckt; und wobei die zweiten elektrischen Anschlussmittel (25) ein zweites elektrisches Verbindungselement (25) umfassen, das stabil am Motorgehäuse (13) befestigt ist und sich in einer zweiten Richtung im wesentlichen parallel zur ersten Richtung erstreckt, um in das erste Verbindungselement (24) einzugreifen, wenn das Gehäuse (14) mechanisch mit dem Endabschnitt (13a) des Motorgehäuses (13) verbunden ist.

4. Elektrisches Haushaltsgerät gemäß Anspruch 2, wobei die ersten (24) und zweiten (25) Anschlussmittel elektrische Einschnapp-Verbindungsmittel umfassen.

5. Elektrisches Haushaltsgerät gemäß einem der vorangehenden Ansprüche, wobei das Gehäuse (14) eine Basisplatte (18) zur Unterstützung des elektronischen Schaltkreises (15) umfasst.

6. Elektrisches Haushaltsgerät gemäß Anspruch 5, wobei der elektronische Schaltkreis (15) einen Wechselrichter umfasst.

7. Elektrisches Haushaltsgerät gemäß Anspruch 5 oder 6, wobei der elektronische Schaltkreis (15) eine Schnittstellenschaltung (15a) zum Empfangen, Filtern und Konditionieren von Geschwindigkeitssignalen (SV) von einer Hauptsteuerungseinheit (10); einen mit der Schnittstellenschaltung (15a) verbundenen Steuerschaltkreis (15b) zum Empfangen der Geschwindigkeitssignale (SV) und zur entsprechenden Abgabe von Steuerungssignalen; und einen Leistungsschaltkreis (15c) umfasst, der die Steuerungssignale empfängt und entsprechend die Strom-/Spannungsversorgung des Elektromotors (11) zur Steuerung der Geschwindigkeit des Elektromotors (11) steuert.

8. Elektrisches Haushaltsgerät gemäß Anspruch 7, wobei die Schnittstellenschaltung (15a), der Steuerschaltkreis (15b) und der Leistungsschaltkreis (15c) drei entsprechende elektronische Baugruppen (30a, 30b, 30c) umfassen, die einander zugewandt im Gehäuse (14) so übereinander angeordnet sind, dass sie im wesentlichen eine Sandwich-Struktur bilden.

9. Elektrisches Haushaltsgerät gemäß Anspruch 8, wobei wenigstens zwei der elektronischen Baugruppen (30a, 30b, 30c) eine Anzahl von Kontaktflächen oder Oberflächenkontaktabschnitten (31) aufweisen, die aus leitendem Material gemacht sind und die Eingangs-/Ausgangsanschlüsse der elektronischen Schaltkreise der einzelnen elektronischen Baugruppen (30a, 30b, 30c) begrenzen, wobei die elektronischen Baugruppen (30a, 30b, 30c) elastisch betätigte elektrische Verbindungsvorrichtungen (32) umfassen, die zwischen den elektronischen Baugruppen (30a, 30b, 30c) eingesetzt sind und an den Oberflächenkontaktabschnitten (31) so ausgerichtet sind, dass sie zu diesen eine elektrische Verbindung herstellen.

10. Elektrisches Haushaltsgerät gemäß Anspruch 9, wobei die Verbindungsvorrichtungen (32) jeweils einen rohrförmigen Abschnitt (32a) umfassen, dessen freie Enden zwei entsprechenden Oberflächenkontaktabschnitten (31) zweier getrennter elektronischer Baugruppen (30a, 30b, 30c) zugewandt sind, und ferner eine elastische Feder aus leitendem Material, die im rohrförmigen Abschnitt (32a) eingesetzt ist und deren freie Enden die zwei Oberflächenkontaktabschnitte (31) kontaktieren.

11. Elektrisches Haushaltsgerät gemäß einem der Ansprüche 8 bis 10, wobei wenigstens eine der elektrischen Baugruppen (30a, 30b, 30c) eine periphere Rückhaltewand (34) umfasst, die von der Verbindungsoberfläche der elektronischen Komponenten vorragt, um die elektronischen Komponenten zu umschließen.

12. Elektrisches Haushaltsgerät gemäß einem der Ansprüche 1 bis 11, wobei das elektronische Steuerungsmodul (12) Messfühler (40) (41) zur Bestimmung der Beschleunigung des Antriebs (7) und/oder der Geschwindigkeit des Elektromotors (11) umfasst.

13. Elektrisches Haushaltsgerät gemäß Anspruch 5, wobei die hakenartigen Zungen (21) von einer Wand des Gehäuses (14) in eine Richtung im wesentlichen senkrecht zur Basisplatte (18) vorragen.

## Revendications

1. Appareil électroménager (1) comprenant un caisson (2), un tambour à linge (5) monté à l'intérieur du caisson (2) pour tourner librement autour d'un axe de rotation prédéterminé (A) ; un entraînement (7) pour faire tourner le tambour (5) autour dudit axe de rotation (A) et comprenant un moteur électrique (11) avec un logement de moteur (13) ; et un module de commande électronique (12), qui est connecté électriquement audit moteur électrique (11) pour réguler la vitesse du moteur électrique (11) et est intégré avec le moteur électrique (11), dans lequel le module de commande électronique (12) comprend un circuit électronique (15) qui régule la vitesse dudit moteur électrique (11) pour réguler la vitesse de rotation du tambour (5) ; et un boîtier (14) pour loger ledit circuit électronique (15) ; dans lequel ledit logement de moteur (13) comprend au moins une portion d'extrémité (13a) ; ledit boîtier (14) étant fixé de façon amovible à ladite au moins une portion d'extrémité (13a) du logement de moteur (13), ledit boîtier (14) et ladite au moins une portion d'extrémité (13a) sont raccordés l'un à l'autre par un mécanisme de raccordement enclipsable (20), **caractérisé en ce que** ledit mécanisme de raccordement enclipsable (20) comprend un nombre de languettes de type crochet (21) dépassant d'une paroi du boîtier (14), et s'étendant dans une direction sensiblement parallèle à un axe longitudinal dudit logement de moteur (13) pour s'ajuster à l'intérieur de sièges respectifs formés dans ladite au moins une portion d'extrémité (13a).

2. Appareil électroménager selon la revendication 1, et comprenant un premier (24) et un second (25) moyens de connexion électrique fixés de manière rigide audit boîtier (14) et audit logement de moteur (13) respectivement, et alignés l'un avec l'autre, lesdits premier (24) et second (25) moyens de connexion électrique étant connectés audit circuit électronique (15) et audit moteur électrique (11) respectivement.

3. Appareil électroménager selon la revendication 2, dans lequel ledit premier moyen de connexion électrique (24) comprend un premier connecteur électrique (24) conçu pour dépasser d'une paroi latérale du boîtier (14) et pour s'étendre dans une première direction parallèle à un axe longitudinal du logement de moteur (13) ; et ledit second moyen de connexion électrique (25) comprend un second connecteur électrique (25) fixé de manière stable audit logement de moteur (13) et s'étendant dans une seconde direction sensiblement parallèle à ladite première direction, de façon à s'engager avec ledit premier connecteur (24) lorsque le boîtier (14) est raccordé mécaniquement à ladite portion d'extrémité (13a) du logement de moteur (13).

4. Appareil électroménager selon la revendication 2, dans lequel lesdits premier (24) et second (25) moyens de connexion comprennent des moyens de connexion électriques enclipsables.

5. Appareil électroménager selon l'une quelconque des revendications précédentes, dans lequel ledit boîtier (14) comprend une plaque de base (18) pour supporter ledit circuit électronique (15).

6. Appareil électroménager selon la revendication 5, dans lequel ledit circuit électronique (15) comprend un onduleur.

7. Appareil électroménager selon la revendication 5 ou 6, dans lequel ledit circuit électronique (15) comprend un circuit d'interface (15a) pour recevoir, filtrer et conditionner des signaux de vitesse (SV) provenant d'une unité de commande principale (10) ; un circuit de commande (15b) connecté au circuit d'interface (15a) pour recevoir les signaux de vitesse (SV) et générer des signaux de commande en conséquence ; et un circuit d'alimentation (15c), qui reçoit les signaux de commande et régule en conséquence l'alimentation en courant/tension du moteur électrique (11) pour réguler la vitesse du moteur électrique (11).

8. Appareil électroménager selon la revendication 7, dans lequel le circuit d'interface (15a), le circuit de commande (15b) et le circuit d'alimentation (15c) comprennent trois cartes électroniques (30a, 30b, 30c) respectives qui sont superposées face à face à l'intérieur du boîtier (14) pour former une structure sensiblement en sandwich.

9. Appareil électroménager selon la revendication 8, dans lequel au moins deux desdites cartes électroniques (30a, 30b, 30c) ont un nombre de zones de contact ou de portions de contact de surface (31) réalisées en matériau conducteur et définissant les bornes d'entrée/de sortie des circuits électroniques de chaque carte électronique (30a, 30b, 30c) ; lesdites cartes électroniques (30a, 30b, 30c) comprenant des dispositifs de connexion électrique actionnés élastiquement (32), qui sont interposés entre les cartes électroniques (30a, 30b, 30c) et alignés avec, pour connecter électriquement, les portions de contact de surface (31).

10. Appareil électroménager selon la revendication 9, dans lequel lesdits dispositifs de connexion (32) comprennent chacun une portion tubulaire (32a) dont les extrémités libres font face à deux portions de contact de surface (31) respectives de deux cartes électroniques séparées (30a, 30b, 30c) ; et un ressort élastique réalisé en matériau conducteur et ajusté à l'intérieur de la portion tubulaire (32a), les extrémités libres du ressort entrant en contact avec les deux portions de contact de surface (31).

11. Appareil électroménager selon l'une quelconque des revendications 8 à 10, dans lequel au moins l'une des cartes électroniques séparées (30a, 30b, 30c) comprend une paroi de retenue périphérique (34) dépassant de la surface de connexion des composants électroniques pour entourer les composants électroniques.

12. Appareil électroménager selon l'une quelconque des revendications 1 à 11, dans lequel ledit module de commande électronique (12) comprend des capteurs de mesure (40) (41) pour déterminer l'accélération dudit entraînement (7) et/ou la vitesse dudit moteur électrique (11).

13. Appareil électroménager selon la revendication 5, dans lequel les languettes de type crochet (21) dépassent d'une paroi dudit boîtier (14) dans une direction sensiblement perpendiculaire à la plaque de base (18).
